# FASCICULE DE BREVET EUROPEEN

(11) **EP 1 904 768 B1**
(45) Date de publication et mention de la délivrance du brevet: **27.05.2009**
(21) Numéro de dépôt: 06794487.6
(22) Date de dépôt: 19.07.2006
(51) Int. Cl.: F16J 9/18, F16J 9/14

(54) **SEGMENT D'ETANCHEITE SUPERIEUR**
OBERES VERSIEGELUNGSSEGMENT
UPPER SEALING SEGMENT

(30) Priorité: 20.07.2005 FR 0552251
(43) Date de publication de la demande: 02.04.2008
(73) Titulaire: Peugeot Citroën Automobiles S.A., 78140 Vélizy Villacoublay (FR)
(72) Inventeur: BOULARD, Jean-Marc, F-75011 Paris (FR)
(74) Mandataire: Ménès, Catherine
(86) Numéro de dépôt international: PCT/FR2006/050733
(87) Numéro de publication internationale: WO 2007/010169

(56) Documents cités:
- CH-A- 366 181
- DE-C- 498 088
- FR-A- 1 578 156
- GB-A- 278 094
- US-A- 1 861 716

## Description

La présente invention concerne les moteurs à combustion interne et a notamment pour objet un dispositif d'étanchéité de piston. L'invention concerne plus particulièrement un piston comportant au moins un segment, ledit segment présentant une coupe et étant disposé dans une gorge de forme annulaire ménagée en périphérie du piston, et un organe de maintien du segment dans la gorge, ledit organe de maintien comprenant des moyens pour obturer le passage au niveau de la coupe du segment.

La publication US 1,861,716 montre un tel dispositif d'étanchéité et correspond au préambule de la revendication 1.

Dans les moteurs à combustion interne, il est connu de disposer un ou plusieurs segments de piston logés dans une gorge du piston, de manière à assurer l'étanchéité entre la partie inférieure du moteur qui comprend le carter d'huile de lubrification, et la partie supérieure du moteur qui comprend la chambre de combustion. De préférence trois types de segment de piston sont nécessaires pour assurer cette étanchéité lorsque le piston est en mouvement de translation dans la chemise. Chacun des segments assure un rôle déterminé. C'est ainsi qu'il est connu de disposer, dans une gorge supérieure, un segment dit supérieur destiné à résister à la chaleur et à assurer l'étanchéité de la chambre de combustion, dans une gorge inférieure, un segment racleur destiné à empêcher les remontées d'huile du carter d'huile vers la chambre de combustion, et, dans au moins une gorge intermédiaire, un segment de compression assurant la récupération de l'huile qui remonte du carter d'huile.

Toutefois l'étanchéité de la chambre de combustion n'est pas totalement assurée par les segments d'étanchéité supérieurs et l'on observe un certain débit de gaz de combustion vers la partie inférieure du moteur en dépit de la présence du segment d'étanchéité supérieur. Des solutions ont été développées pour limiter le passage des gaz en utilisant un organe de maintien destiné à limiter les battement radiaux et/ou axiaux du segment d'étanchéité supérieur, lesquels battements sont en partie responsables du passage des gaz. Toutefois, ces solutions n'ont que partiellement résolu la problématique du passage des gaz.

En effet, les segments d'étanchéité supérieurs présentent une coupe nécessaire à l'ouverture du segment lors de l'opération de montage de ce dernier dans la gorge supérieure. Lorsque le segment est en contact plan sur l'un des flancs de gorge, il se forme alors un passage pour les gaz de combustion au niveau de la coupe du segment. Traversant ce passage, les débits de gaz dits « de blow-by » observés en pleine charge ou les débits de gaz dits « de blow-back » dans les phases de levés de pied représentent au moins 85% du débit total.

C'est pourquoi, la présente invention a pour but de limiter le débit des gaz en fermant tout ou partie du passage défini par le jeu à la coupe du segment. Plus précisément la présente invention a pour objet un dispositif d'étanchéité d'un piston, comportant une gorge de piston, au moins un segment monté dans la gorge du piston et présentant une coupe, un organe de maintien du segment dans la gorge, caractérisé en ce que ledit organe de maintien plaque le segment contre un des flancs de la gorge et comprend des moyens pour fermer tout ou partie du passage défini par la coupe du segment.

Selon certaines caractéristiques :
- Les moyens pour fermer tout ou partie du passage défini par la coupe du segment comprennent une plaque en contact avec une des faces du segment et recouvrant le passage défini par la coupe du segment.
- Ladite plaque admet une largeur quasiment égale à la largeur du segment.

Selon d'autres caractéristiques :
- Les moyens pour fermer tout ou partie du passage défini par la coupe du segment comprennent une plaque perpendiculaire au plan défini par le segment et recouvrant le passage défini par la coupe du segment.
- Ladite plaque perpendiculaire est en contact avec la périphérie intérieure du segment et recouvre le passage défini par la coupe du segment.
- le segment comprend un dispositif destiné à limiter la rotation autour de l'axe du piston de ladite plaque perpendiculaire par rapport au segment.
- ledit dispositif consiste en un rail venu de matière le long de la périphérie intérieure du segment.

Selon d'autres caractéristiques :
- Les moyens pour fermer tout ou partie du passage défini par la coupe du segment sont venus de matière de l'organe de maintien.
- Le segment est un segment d'étanchéité supérieur.

L'invention concerne également un piston de moteur à combustion interne comportant au moins un dispositif d'étanchéité conforme à l'une quelconque des revendications précédentes.

L'invention va maintenant être décrite plus en détail mais de façon non limitative en regard des figures annexées, dans lesquelles :
- La figure 1 est une représentation schématique d'une partie d'un moteur composée notamment d'un vilebrequin et d'un piston monté dans une culasse et comportant trois gorges logeant chacune un segment.
- La figure 2 est une représentation schématique de la partie supérieure d'un piston de moteur à combustion interne comportant le dispositif d'étanchéité conforme à l'invention.
- La figure 3 est une représentation schématique détaillée du dispositif d'étanchéité assemblé conformément à l'invention.

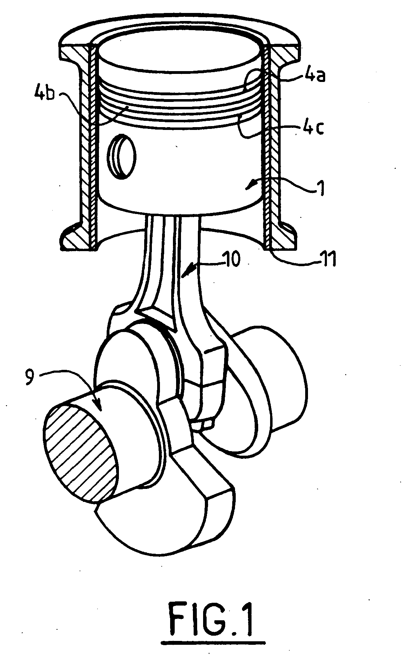

La figure 1 représente une partie d'un moteur à combustion interne composée notamment d'un vilebrequin 9, d'une bielle 10 et d'un piston 1 placé dans une chemise 11 et pourvu de trois gorges 4a, 4b, 4c destinées à loger chacune un segment de piston. Lorsque le vilebrequin 9 est en rotation, il met en mouvement de translation via la bielle 10 le piston 1 dans la chemise 11.

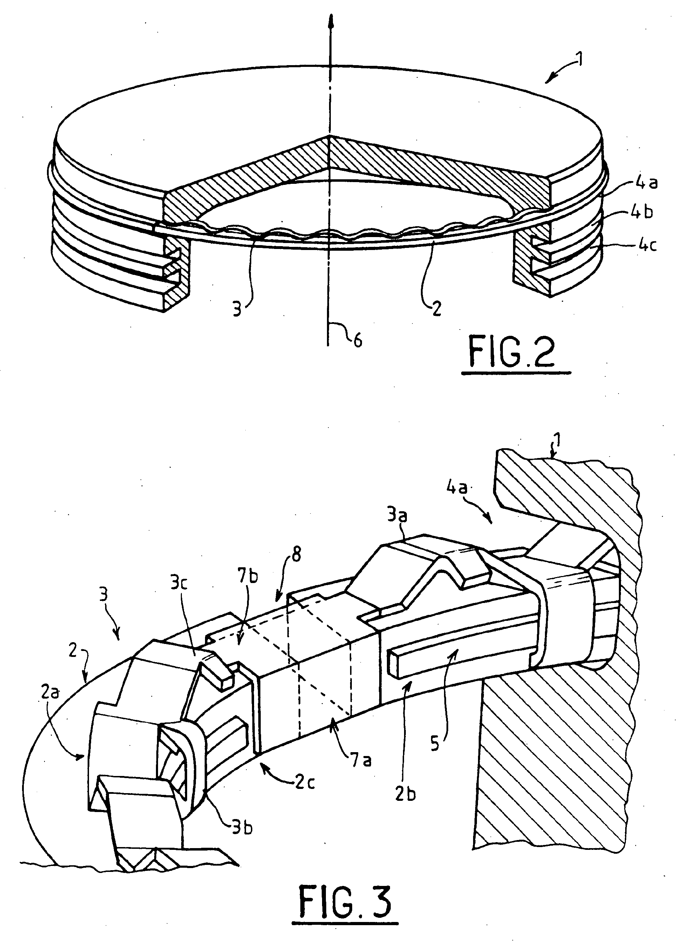

La figure 2 représente le piston 1 comportant dans sa gorge 4a un segment d'étanchéité supérieur 2. Entre la partie supérieure de la gorge 4a et la face supérieure 2a du segment 2 est interposé un organe de maintien 3 destiné à plaquer, de par sa raideur axiale, le segment 2 contre la partie inférieure de la gorge 4a.

La figure 3 représente un mode de réalisation de l'invention dans lequel l'organe de maintien 3 comporte notamment une partie circonférentielle 3a, formant un ressort, constituée d'une succession de formes trapézoïdales, dont les sommets sont en contact alternativement avec le flanc supérieur de la gorge 4a et avec la face supérieure 2a du segment 2. Ledit organe de maintien 3 comporte également des crochets 3b disposés régulièrement du côté intérieur de la partie circonférentielle 3a et destinés à accrocher l'organe de maintien 3 à un rail 5 venu de matière le long de la périphérie intérieure 2b du segment 2. L'organe de maintien 3 comprend également des moyens 7b pour fermer tout ou partie du passage défini par la coupe 8 du segment 2. Ces moyens consistent en une plaque 7a en contact avec la périphérie intérieure 2b du segment 2 et recouvrant le passage défini par la coupe 8 du segment 2, et en une plaque 7b en contact avec la face supérieure 2a du segment 2 et recouvrant le passage défini par la coupe 8 du segment 2.

Conformément à l'invention, la largeur de la plaque 7a doit être légèrement inférieure à l'épaisseur du segment 2 afin de ne pas être en contact avec le flanc inférieur de la gorge 4a et de ne pas gêner ainsi le plaquage du segment 2 contre ledit flanc. Toutefois, afin de fermer au mieux le passage défini par la coupe 8 du segment 2, il est avantageux que la largeur de la plaque 7a soit aussi grande que possible.

De même, la largeur de la plaque 7b doit être légèrement inférieure à la largeur du segment 2 afin de ne pas être en contact avec la chemise 11 et de ne pas gêner ainsi le plaquage du segment 2 contre ladite chemise. Toutefois, afin de fermer au mieux le passage défini par la coupe 8 du segment 2, il est également avantageux que la largeur de la plaque 7b soit aussi grande que possible.

Avantageusement, les moyens 7b sont venus de matière de l'organe de maintien 3, en ce sens qu'ils forment une seule et même pièce fabriquée par découpe, emboutissage et pliage à partir d'un feuillard en acier à ressort.

Afin de garantir l'obturation constante du passage défini par la coupe 8 du segment 2, un dispositif 5 est prévu de manière à limiter la rotation, par rapport au segment 2, de l'organe de maintien 3 autour de l'axe 6 du piston 1. Ce dispositif 5 est avantageusement le rail 5 venu de matière le long de la périphérie intérieure 2b du segment 2 et interrompu au voisinage de la coupe 8 du segment 2, de manière à limiter la rotation de la plaque 7a autour de l'axe 6.

Le dispositif d'étanchéité précédemment décrit présente ainsi l'avantage de résoudre le problème du passage des gaz par la coupe 8 du segment 2 sans ajouter de pièce supplémentaire, puisque les moyens d'obturation 7b employés résultent de modifications peu coûteuses de l'organe de maintien 3 du segment 2.

Selon un autre mode de réalisation, les moyens 7b peuvent consister en une fermeture du passage défini par la coupe 8 seulement au niveau de la face 2a du segment 2 de manière à limiter le flux axial des gaz. On notera alors que la plaque 7a étant absente, on a pas de limitation du flux radial des gaz au niveau du passage défini par la coupe 8 du segment 2.

## Revendications

1. Dispositif d'étanchéité d'un piston (1), comportant une gorge (4a) de piston, au moins un segment (2) monté dans ladite gorge (4a) du piston (1) et présentant une coupe (8), un organe de maintien (3) du segment (2) dans la gorge (4a), **caractérisé en ce que** ledit organe de maintien (3) plaque le segment (2) contre un des flancs de la gorge (4a) et comprend des moyens (7b) pour fermer tout ou partie du passage défini par la coupe (8) du segment (2).

2. Dispositif d'étanchéité, selon la revendication 1, **caractérisé en ce que** les moyens comprennent une plaque (7b) en contact avec une des faces (2a, 2c) du segment (2).

3. Dispositif d'étanchéité, selon la revendication précédente, **caractérisé en ce que** la plaque (7b) admet une largeur quasiment égale à la largeur du segment (2).

4. Dispositif d'étanchéité, selon l'une quelconque des revendications précédentes, **caractérisé en ce que** les moyens (7b) comprennent une plaque (7a) perpendiculaire au plan défini par le segment (2).

5. Dispositif d'étanchéité, selon la revendication précédente, **caractérisé en ce que** la plaque (7a) est en contact avec la périphérie intérieure (2b) du segment (2).

6. Dispositif d'étanchéité, selon l'une quelconque des revendications 4 ou 5, **caractérisé en ce que** le segment (2) comprend un dispositif (5) pour maintenir les moyens (7b) au niveau de la coupé (8) du segment (2).

7. Dispositif d'étanchéité, selon la revendication précédente, **caractérisé en ce que** le dispositif (5) consiste en un rail venu de matière le long de la périphérie intérieure du segment (2).

8. Dispositif d'étanchéité, selon l'une quelconque des revendications précédentes, **caractérisé en ce que** les moyens (7b) sont venus de matière de l'organe de maintien (3).

9. Dispositif d'étanchéité, selon l'une quelconque des revendications précédentes, **caractérisé en ce que** le segment (2) est adapté pour former un segment d'étanchéité supérieur.

10. Piston de moteur à combustion interne comportant au moins un dispositif d'étanchéité conforme à l'une quelconque des revendications précédentes.

## Claims

1. Piston sealing device (1) comprising a piston ring groove (4a), at least one piston ring (2) mounted in the said groove (4a) of the piston (1) and having a break (8), a member (3) for retaining the piston ring (2) in the groove (4a), **characterized in that** the said retaining member (3) presses the piston ring (2) against one of the sides of the groove (4a) and comprises means (7b) for closing some or all of the passageway defined by the break (8) of the piston ring (2) .

2. Sealing device according to Claim 1, **characterized in that** the means comprise a plate (7b) in contact with one of the faces (2a, 2c) of the piston ring (2).

3. Sealing device, according to the preceding claim, **characterized in that** the plate (7b) accepts a width virtually equal to the width of the piston ring (2).

4. Sealing device according to any one of the preceding claims, **characterized in that** the means (7b) comprise a plate (7a) perpendicular to the plane defined by the piston ring (2).

5. Sealing device according to the preceding claim, **characterized in that** the plate (7a) is in contact with the inner periphery (2b) of the piston ring (2).

6. Sealing device according to either one of Claims 4 or 5, **characterized in that** the piston ring (2) comprises a device (5) for retaining the means (7b) at the break (8) of the piston ring (2).

7. Sealing device according to the preceding claim, **characterized in that** the device (5) consists in a rail made of the same material along the inner periphery of the piston ring (2).

8. Sealing device according to any one of the preceding claims, **characterized in that** the means (7b) are made of the same material as, and in one piece with, the retaining member (3).

9. Sealing device according to any one of the preceding claims, **characterized in that** the piston ring (2) is adapted to form an upper piston ring.

10. Piston of an internal combustion engine comprising at least one sealing device according to any one of the preceding claims.

## Patentansprüche

1. Dichtungsvorrichtung eines Kolbens (1), welche aufweist: eine Kolbenringnut (4a), mindestens einen Kolbenring (2), der in der Ringnut (4a) des Kolbens
(1) angebracht ist und einen Ausschnitt (8) aufweist, ein Halteelement (3) zum Halten des Kolbenrings (2) in der Ringnut (4a), **dadurch gekennzeichnet, dass** das Halteelement (3) den Kolbenring
(2) gegen eine der Flanken der Ringnut (4a) presst und Mittel (7b) aufweist, um den Durchlass, der durch den Ausschnitt (8) des Kolbenrings (2) definiert ist, ganz oder teilweise zu verschließen.

2. Dichtungsvorrichtung nach Anspruch 1, **dadurch gekennzeichnet, dass** die Mittel eine Platte (7b) aufweisen, die mit einer der Seiten (2a, 2c) des Kolbenrings (2) in Kontakt ist.

3. Dichtungsvorrichtung nach dem vorhergehenden Anspruch, **dadurch gekennzeichnet, dass** die Platte (7b) eine Breite aufweist, die nahezu gleich der Breite des Kolbenrings (2) ist.

4. Dichtungsvorrichtung nach einem der vorhergehenden Ansprüche, **dadurch gekennzeichnet, dass** die Mittel (7b) eine Platte (7a) aufweisen, die zu der durch den Kolbenring (2) definierten Ebene senkrecht ist.

5. Dichtungsvorrichtung nach dem vorhergehenden Anspruch, **dadurch gekennzeichnet, dass** die Platte (7a) in Kontakt mit dem Innenumfang (2b) des Kolbenrings (2) ist.

6. Dichtungsvorrichtung nach einem der Ansprüche 4 oder 5, **dadurch gekennzeichnet, dass** der Kolbenring (2) eine Vorrichtung (5) zum Halten der Mittel (7b) auf der Höhe des Ausschnitts (8) des Kolbenrings (2) aufweist.

7. Dichtungsvorrichtung nach dem vorhergehenden Anspruch, **dadurch gekennzeichnet, dass** die Vorrichtung (5) aus einer Schiene entlang des Innenumfangs des Kolbenrings (2) besteht, die mit diesem aus einem Stück hergestellt ist.

8. Dichtungsvorrichtung nach einem der vorhergehenden Ansprüche, **dadurch gekennzeichnet, dass** die Mittel (7b) mit dem Halteelement (3) aus einem Stück hergestellt sind.

9. Dichtungsvorrichtung nach einem der vorhergehenden Ansprüche, **dadurch gekennzeichnet, dass** der Kolbenring (2) dafür eingerichtet ist, einen oberen Kompressionsring zu bilden.

10. Kolben einer Brennkraftmaschine, welcher mindestens eine Dichtungsvorrichtung nach einem der vorhergehenden Ansprüche aufweist.
